Europäisches Patentamt

European Patent Office

Office européen des brevets

(19)

(11) Publication number : **0 685 955 A2**

## (12) EUROPEAN PATENT APPLICATION

(21) Application number : 95303501.1

(22) Date of filing : 24.05.95

(51) Int. Cl.⁶ : **H04M 3/42, H04Q 3/545, G06F 3/00**

(30) Priority : **03.06.94 US 253520**

(43) Date of publication of application :
**06.12.95 Bulletin 95/49**

(84) Designated Contracting States :
**DE ES FR GB**

(71) Applicant : **AT & T Corp.**
**32 Avenue of the Americas**
**New York, NY 10013-2412 (US)**

(72) Inventor : **Marantz, Lyn R.**
**12 Longstreet Road**
**Manalapan, New Jersey 07726 (US)**
Inventor : **Tuomenoksa, Mark Logan**
**20 Francis Street**
**Shrewsbury, New Jersey 07702 (US)**

(74) Representative : **Johnston, Kenneth Graham et al**
**AT&T (UK) Ltd.**
**5 Mornington Road**
**Woodford Green Essex, IG8 OTU (GB)**

(54) **Outline programming for developing communication services.**

(57) With only an understanding of the functionality to be provided by a service, one can quickly and easily develop or create such a service by, in accordance with the principles of the invention, selecting and arranging instantiations of predetermined "pictures", e.g., icons, into a multilevel outline which generally specifies the service logic of the desired service. Each picture represents a "service building block", e.g., a high level process part and its customizable attributes, and for each instantiation of a picture in the multilevel outline there exists a corresponding instantiation of a service building block. The operation of the instantiations of the service building blocks are customizable in response to attributes supplied by the service creator. A service development system arranges instantiations of the service building blocks, in response to the operations on the pictures, to develop a program that implements the service logic as specified by the multilevel outline. The display of the graphical multilevel outline may be expanded or collapsed by the service creator for viewing convenience without affecting the service logic or attributes of the corresponding service.

FIG. 1

EP 0 685 955 A2

## Technical Field

This invention relates to developing an interactive service to be supplied to users over communications lines.

## Background of the Invention

Providing services to remote users over communications lines has become very popular. Such services, which are often interactive in nature, include: 1) announcement services, 2) information retrieval services, 3) ordering services, 4) banking services, 5) claim status services, 6) registrations services, 7) automated attendant services, among others. Each one of the systems providing such a service must be custom programmed in order to perform the functions that the service provider wishes to provide. In order to develop such a service, i.e., to specify the sequence of operations to be taken by equipment providing the service, one must have a) computer programming skills, b) knowledge of the syntax of a particular programming language, c) knowledge of the underlying hardware providing the service and d) an understanding of the functionality to be provided by the service. Developing the necessary programming skills and knowledge requires the investment of a significant amount of time, and usually money. Hence, it is a goal of the art to facilitate the development of services without such an investment by those who have an understanding of the functionality to be provided by the service.

## Summary of the Invention

We have recognized that an individual with only an understanding of the functionality to be provided by the service can quickly and easily develop or create such a service by, in accordance with the principles of the invention, selecting and arranging instantiations of predetermined "pictures", e.g., icons, into a multilevel outline which generally specifies the service logic of the desired service. Each picture represents a "service building block", e.g., a high level process part and its customizable attributes, and for each instantiation of a picture in the multilevel outline there exists a corresponding instantiation of a service building block. The operation of the instantiations of the service building blocks are customizable in response to attributes supplied by the service creator. A service development system arranges instantiations of the service building blocks, in response to the operations on the pictures, to develop a program that implements the service logic as specified by the multilevel outline. The display of the graphical multilevel outline may be expanded or collapsed by the service creator for viewing convenience without affecting the service logic or attributes of the corresponding service.

In a particular embodiment, the development system includes a display screen for displaying a palette of pictures. Each picture represents a service building block. For each picture selected by the service creator, the development system 1) prompts the service creator for a name for the instantiation of the picture being created, 2) receives a name supplied by the service creator, and 3) creates a particular instantiation of the selected picture. Also created is a particular instantiation of the service building block corresponding to the selected picture. The name assigned to the picture is also assigned to its corresponding service building block. In accordance with the principles of the invention, the service creator indicates to the development system the relative placement of the picture in a graphical multilevel outline by "dragging" the picture on the screen to a desired location in the outline and dropping it thereat. To identify to the service creator the particular instantiation of the selected picture, the name of the picture and its "entry data", i.e., the condition(s) which must occur for the service building block corresponding to the picture to be executed, are displayed with the picture within the outline on the screen. The attributes that customize the operation of a selected instantiation of a service building block are collected from the service creator by employing the appropriate one of a set of editors, each of which is tailored to a respective one of the service building blocks corresponding to the pictures in the palette. Such editors employ an interface typically understood by non-computer-programmers, such as a dialog box. The instantiations of the service building blocks and their associated attributes are represented as text in interpretable "name-value" pairs.

## Brief Description of the Drawing

In the drawing:
FIG. 1 shows the display of a computer that is seen after the service creator has launched an exemplary embodiment of a service development system embodying the principles of the invention;
FIG. 2 shows a dialog box for collecting the name of a picture;

FIG. 3 shows an incipient outline;

FIG. 4 shows a representation of an announcement editor;

FIG. 5 shows an editing field after it has been activated for editing and announcement has been entered therein;

FIG. 6 shows the announcement editor after editing of the text in a text box has been completed;

FIG. 7 shows a portion of an outline for a service that supplies to users of the service their present balance;

FIGs. 8 and 10 shows the editing window that is displayed when a prompt and collect picture in an outline is selected for editing of its parameters;

FIG. 9 shows the editing window of FIG. 8 in which the prompt editing box has been expanded;

FIG. 11 shows a flow chart of an exemplary process by which a service creator adds a picture to the graphical multilevel outline to a service he has created, in accordance with the principles of the invention;

FIG. 12 shows an exemplary subprocess for use in naming a picture, in accordance with an aspect of the invention;

FIG. 13 shows an exemplary process for use in creating instantiations of service building blocks in memory, in accordance with an aspect of the invention;

FIG. 14 shows an exemplary process for use in adding a service building blocks into the program for implementing the service, in accordance with an aspect of the invention; and

FIG. 15 shows an exemplary computer system on which the present invention is implemented.

## Detailed Description

The service development system of the present invention is self-contained utility that is separate from the services it is used to develop. The service development system of the present invention can be implemented on various computers using any number of graphical user interfaces. However, since the preferred embodiment of the invention is designed for the Apple Macintosh®, in particular when it is running Hypercard™, the discussion that follows is tailored, at least in part, to this environment. It is to be understood, however, that the present invention is not limited to the Macintosh environment.

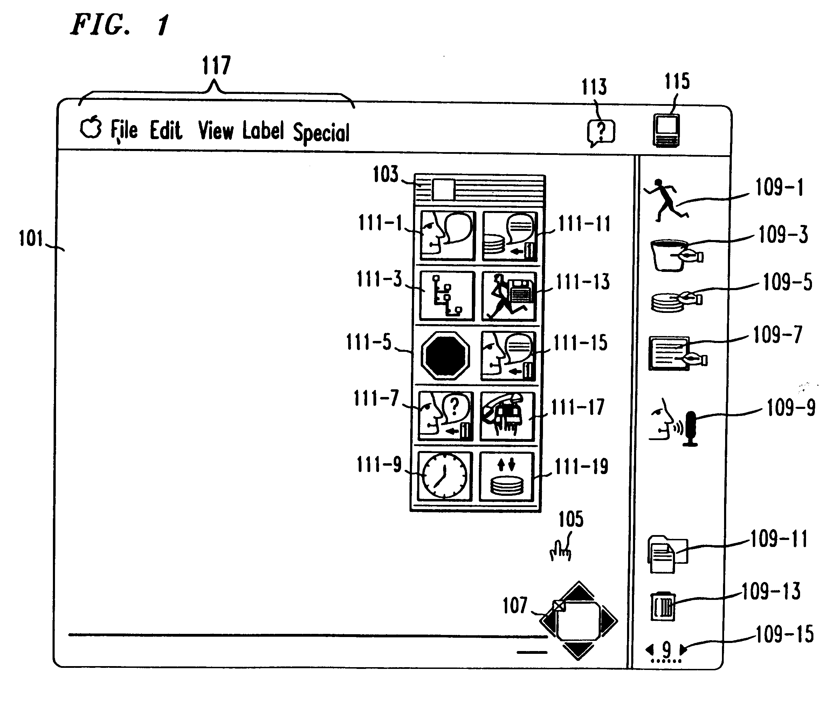

FIG. 1 shows the display of an Apple Macintosh computer that is seen after the service creator has launched an exemplary embodiment of the service development system. In particular, shown are a) workspace 101, b) palette 103, c) mouse pointer 105, d) pan control 107, e) tools 109, f) help icon 113, g) finder icon 115, and h) menu bar 117. Workspace 101 is the area in which an a graphical multilevel outline representing a service may be created using instantiations of pictures selected from palette 103, in accordance with the principles of the invention. Palette 103 may float over workspace 101. Mouse pointer 105 may take different shapes depending on the location of the display over which it is found. Often, the shape of mouse pointer 105 is indicative of the action that will result if the service creator presses the mouse button. Pan control 107 is used for moving the multilevel outline within work space 101 so that its various portions may be made visible to the service creator. Clicking on help icon 113 invokes a context-sensitive help function inherent to the Macintosh which provides instructions to a service creator relating to operation of the Macintosh. Clicking on finder icon 115 allows the service creator to switch to other tasks that are simultaneously running on the Macintosh computer. Menu bar 117 provides menu choices of functions that may be selected by the service creator.

Palette 103 contains pictures 111, e.g., icons, each of which corresponds to a service building block. Palette 103 includes: 1) announcement picture 111-1, 2) call flow picture 111-3, 3) stop picture 111-5, 4) prompt and collect picture 111-7, 5) time branch picture 111-9, 6) auto menu picture 111-11, 7) media delivery picture 111-13, 8) menu picture 111-15, 9) route call picture 111-17, 10) data operations picture 111-19. Announcement picture 111-1 corresponds to a service building block that plays a prompt to a caller using the service. Call flow picture 111-3 represents a service building block for invoking a service subroutine. Stop picture 111-5 corresponds to a service building block that causes operation of the service to cease and which may hang up the line on which the service user's call was received. Prompt and collect picture 111-7 plays a prompt to a service user requesting information and collects the information that is supplied by the service user in response to the prompt. Validity of the information itself that is collected is not performed. Time branch picture 111-9 is used to alter the flow of the service depending on the day, date, or time at which the time branch is encountered. Auto menu picture 111-11 a) plays an announcement to the service user informing him that multiple pieces of data matching the service user supplied input have been found, b) identifies the data to the service user, and c) receives the user's response indicating which of the pieces of data is indeed the correct one. Media delivery picture 111-13 delivers information to the service user. The information may be delivered over a separate call and may be in any form specified by the service user, e.g., voice, fax, or e-mail. Menu picture 111-15 plays an announcement of specific choices to the service user and will accept a response only from the given choices. Route call picture 111-17 is used for transferring the call, e.g., to a live representative or a voice messaging system.

Data operations picture 111-19 represents data operations such as query, set, update, switch (logical decision) and loop. Each particular data operation has its own picture. The pictures for the particular data operations pop up for selection when the data operations picture is selected. Only the pictures of the particular data operations may actually be selected for placement in an outline in work space 101.

Tools 109 include a) run time simulation 109-1, b) global data (bucket) editor 109-3, c) table editor 109-5, d) media screens 109-7, e) record prompts 109-9, f) document file management 109-11, g) trash can 109-13, and h) slider 109-15. Run time simulation 109-1 invokes simulation of the service as represented by the multilevel outline presently in work space 101. Global data (bucket) editor 109-3 is used for editing all types of data except tables, which are edited by table editor 109-5. Media screens 109-7 is used to display various screens to the service user. Record prompt 109-9 is used to make audio recordings of prompts that are supplied to a service user. Document file management 109-11 is used for saving, closing, printing and organizing files containing various multilevel outlines representing services. Trash can 109-13 is used for disposing of unwanted pictures.

Slider 109-15 controls the view of the outline, without affecting the service logic or attributes of the service represented by the outline, by expanding or collapsing the outline to show only levels up to the indicated level. Clicking on the left arrow of slider 109-15 will collapse the outline by one level. Similarly, clicking on the right arrow of slider 109-15 will expand the outline by one level.

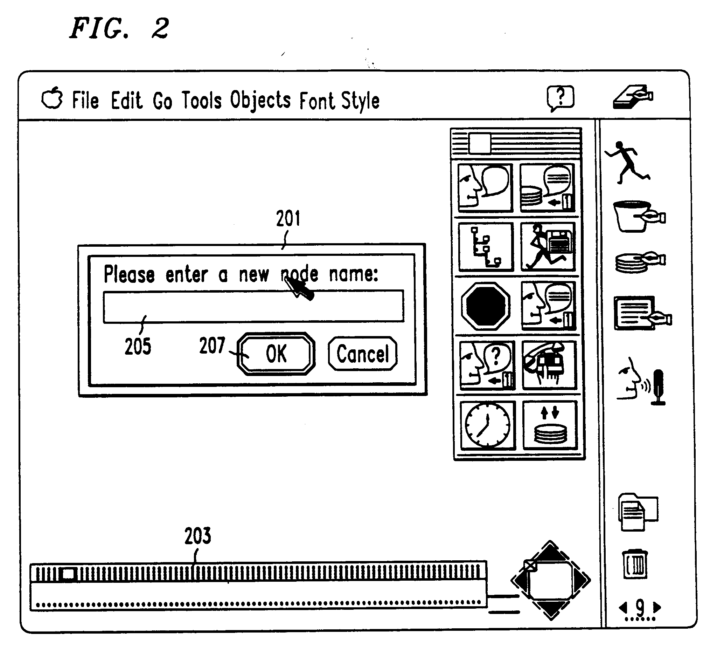

The service creator selects a picture from palette 103 by moving the mouse pointer over the desired picture, pressing the mouse button and dragging the selected picture onto work space 101. As a result, the service creator is prompted to enter the name for the new picture, e.g., node, to be added to the outline. FIG. 2 shows dialog box 201 for collecting a name of the picture. FIG. 2 also shows instruction box 203 in which instructions on the action to be taken by the service creator may be provided. To enter the name of the new picture, the service creator types the desired name into text box 205 and presses the "OK" button 207.

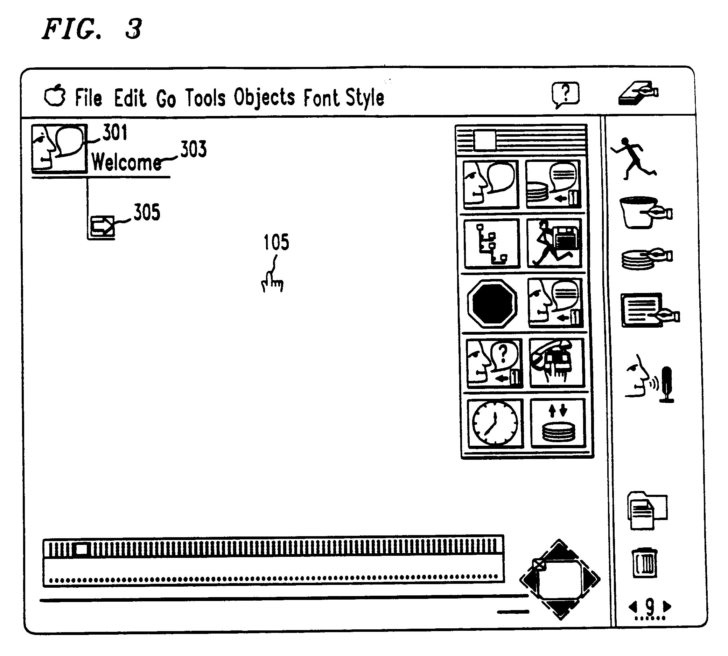

Assuming the service creator selected announcement picture 111-1 and typed "Welcome" into text box 205, the resulting incipient outline is shown in FIG. 3. Shown is picture 301 and connected thereto are a) the name of the particular instantiation 303 and b) attachment point 305, which is the location at which other pictures may be attached to the outline. Attachment point 305 also specifies the entry data, i.e., the condition(s) which must occur for the service building block corresponding to the picture attached to attachment point 305 to be executed.

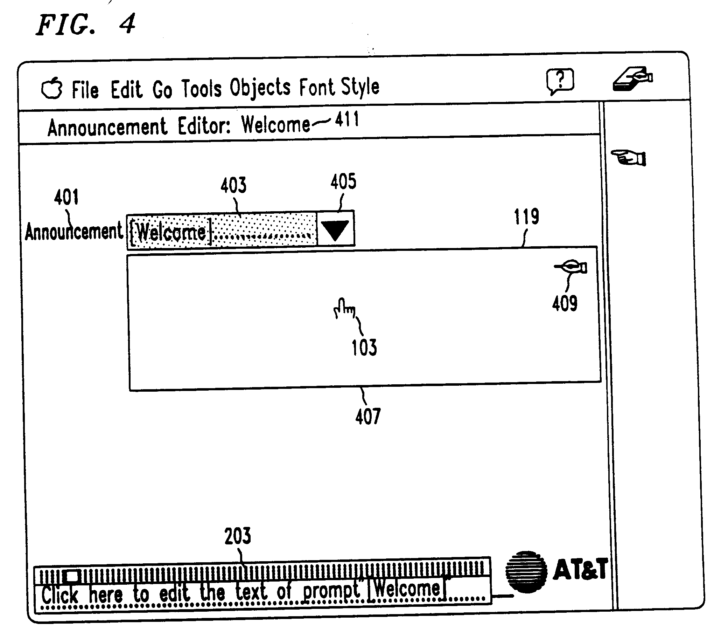

The service creator invokes the announcement editor to specify the announcement to be provided by instantiation 301 of announcement picture 111-1. FIG. 4 shows a representation of the announcement editor. The particular type of picture that is being edited is shown in field 401 while field 411 displays the name of the particular instantiation of the picture. Field 403 is a name given to the announcement text. Unless another name is given, the name of the picture is used as a default. Drop down control 405 is used to bring up editing field 407 Note that instruction box 203 is now providing instructions to the service creator that he should click editing field 407 to begin the process of editing the text of a prompt for the "welcome" instantiation 301 of announcement picture 111-1. That editing field 407 may be used for text entry is also represented by editing icon 409.

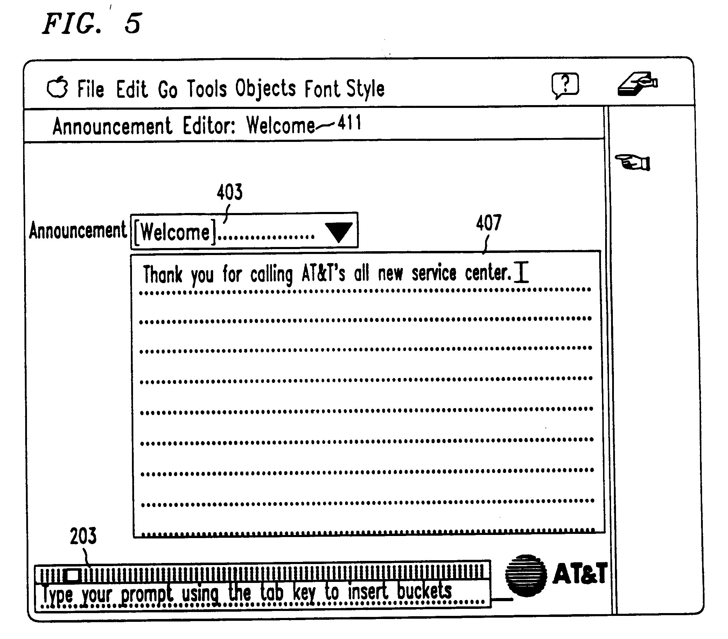

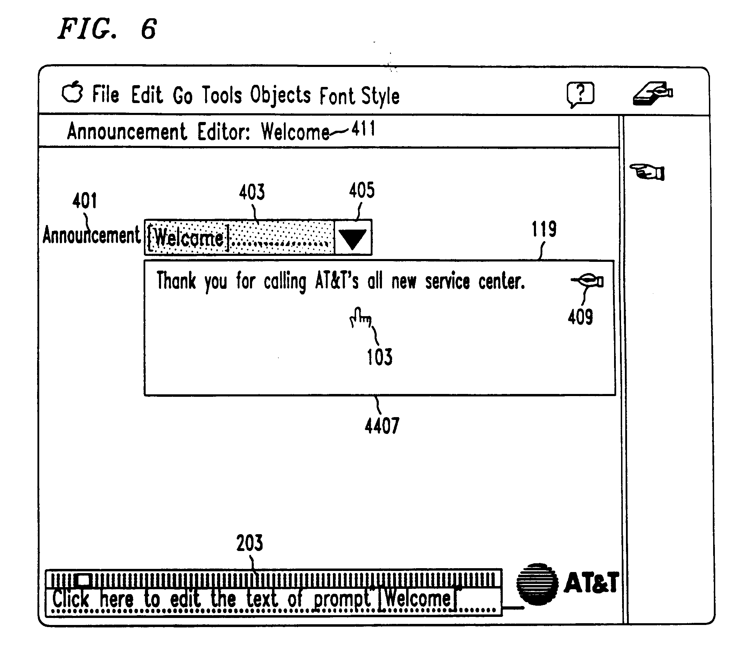

FIG. 5 shows editing field 407 after it has been activated for editing and the announcement "Thank you for calling AT&T's all new service center." has been entered therein. Note again that instructions are provided to the service creator in instruction box 203. FIG. 6 shows the announcement editor after editing of the text in text box 407 has been completed.

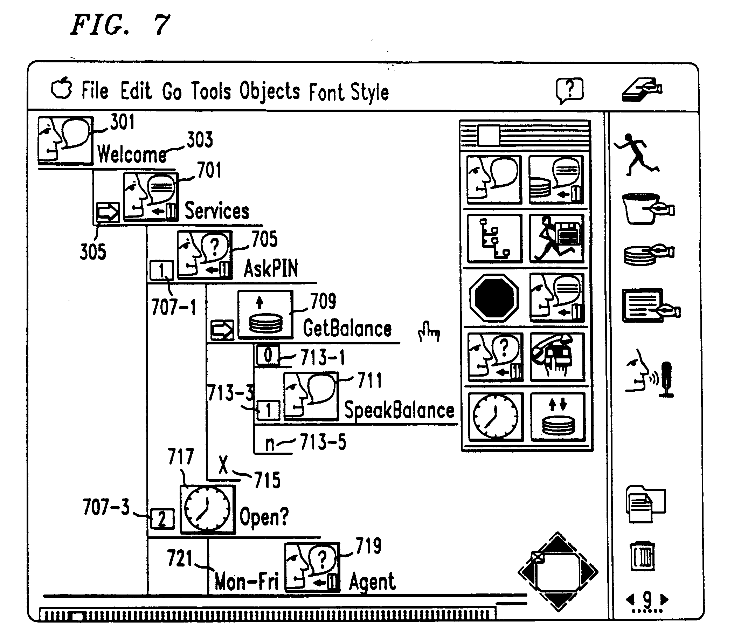

FIG. 7 shows a portion of an outline for a service that supplies to users of the service their present balance. The pictures included in the outline are Welcome 303, an instantiation of announcement picture 111-1; Services 701, an instantiation of menu select picture 111-15; AskPIN 705, an instantiation of prompt and collect picture 111-7; GetBalance 709, an instantiation of data operations picture 111-19; SpeakBalance 711, another instantiation of announcement picture 111-1, Open? 717, an instantiation of time branch picture 111-9; and Agent, another instantiation of prompt and collect picture 111-7.

Also shown in FIG. 7 are the attachment point and entry data for each picture. The entry data, as noted above, is the condition(s) which must occur for the service building block corresponding to the picture to be executed. The display of the attachment point changes to indicate the particular entry conditions that are assigned to that attachment point. Attachment point 305 indicates execution continues at the next picture one level down in the multilevel outline upon completion of execution of the parent. Attachment point 707-1 indicates that execution will continue only when a "1" is received from the service user in response to the menu provided by execution of the service building block corresponding to Services picture 701. Similarly, attachment point 707-3 will continue only when a "2" is received from the service user in response to the menu provided by execution of the service building block corresponding to Services picture 701. Attachment point 713-1 indicates that on the data lookup of picture 709 there were no matches while attachment point 713-3 indicates there was exactly 1 match. Attachment point 713-5 indicates multiple matches. A picture has not yet been assigned to attachment point 713-3. It is noted that in the event no picture is assigned to any attachment point, a default halt picture is assigned. Attachment point 715 indicates that an error condition resulted during the execution of the service building block for AskPIN picture 705. Such an error condition could be that a PIN of the proper length was not supplied during a predetermined time period.

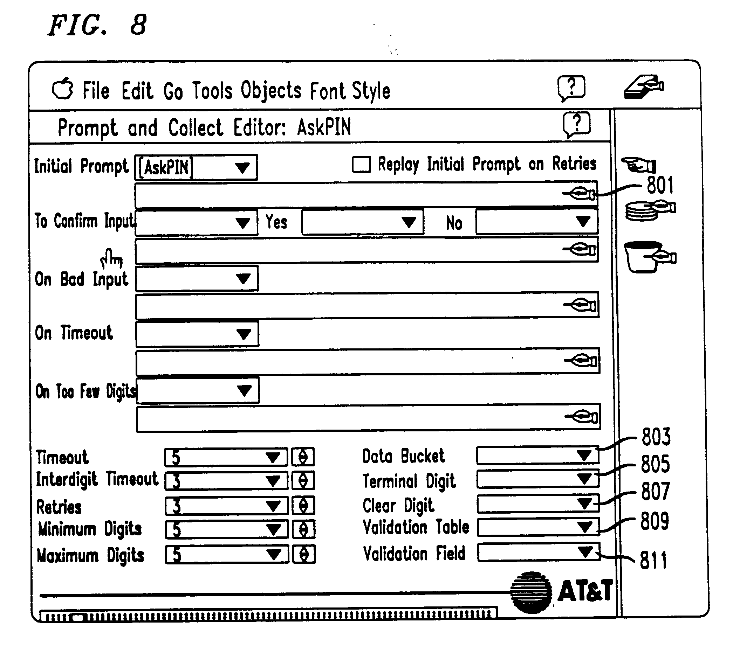

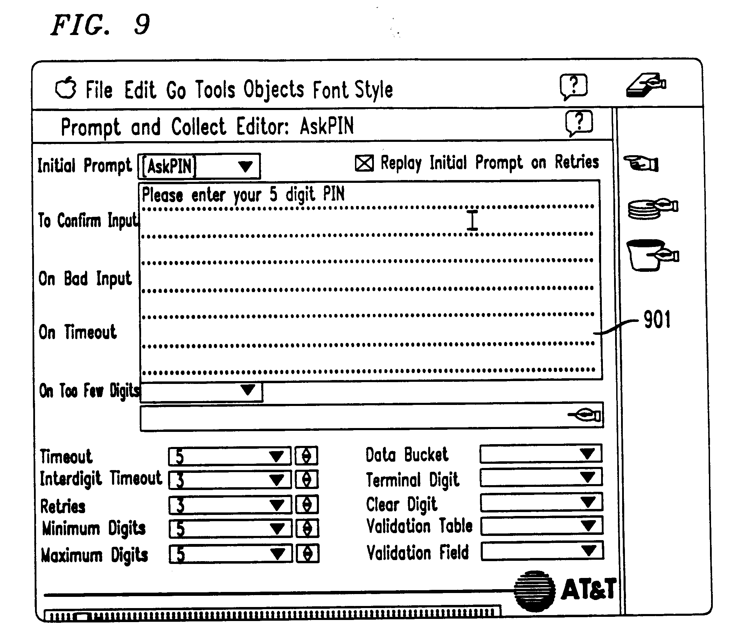

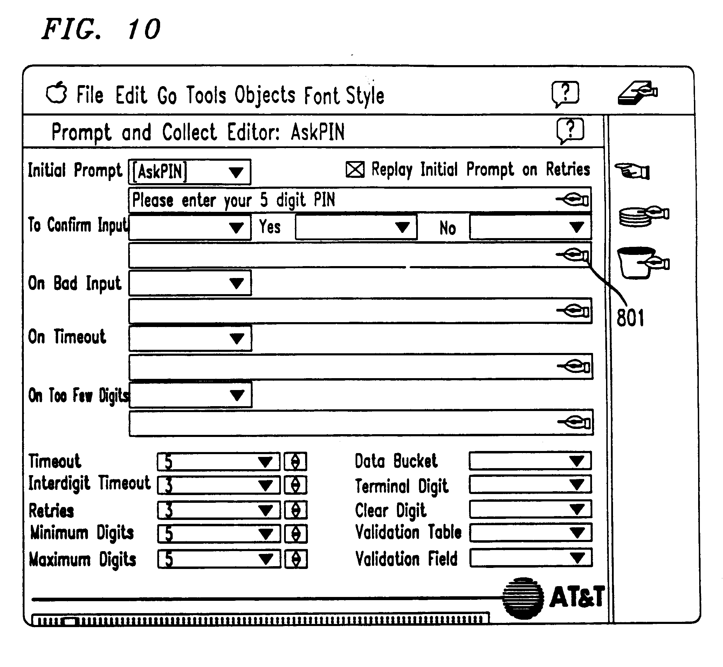

FIG. 8 shows the editing window that is displayed when a prompt and select picture in an outline is selected for editing of its parameters. Prompt box 801 displays the first line of text that is to be spoken to a caller as the prompt. When the service creator presses the mouse button while the mouse pointer is within prompt box 801, prompt box 801 expands into prompt editing box 901, shown in FIG. 9. In FIG. 9, the service creator has typed into prompt editing box 901 the prompt "Please enter your 5 digit PIN", so that when the instantiation of the AskPIN prompt and collect picture is executed the service user will be asked to enter his 5 digit PIN. Upon completion of editing the prompt in prompt box 901, when the service creator presses the mouse button while the mouse pointer is outside of prompt editing box 901, the display of the editing window shown in FIG. 8 will have the updated appearance shown in FIG. 10.

Those skilled in the art of developing services will readily recognize the values required to be filled into the fields of FIG. 8 whose names are listed on the left hand side. Named on the right hand side are a) data bucket 803, which designates a storage area for user supplied information; b) terminal digit 805, which specifies a particular character, e.g., #, to be regarded as the end of a variable length string of characters supplied by a service user; c) clear digit 807; which specifies a character that when entered by the service user causes all previously entered characters to be cleared; d) validation table 809 and e) validation field 811 which specify data against which a service user's input is to be validated against without requiring a special data base data processing picture to be used.

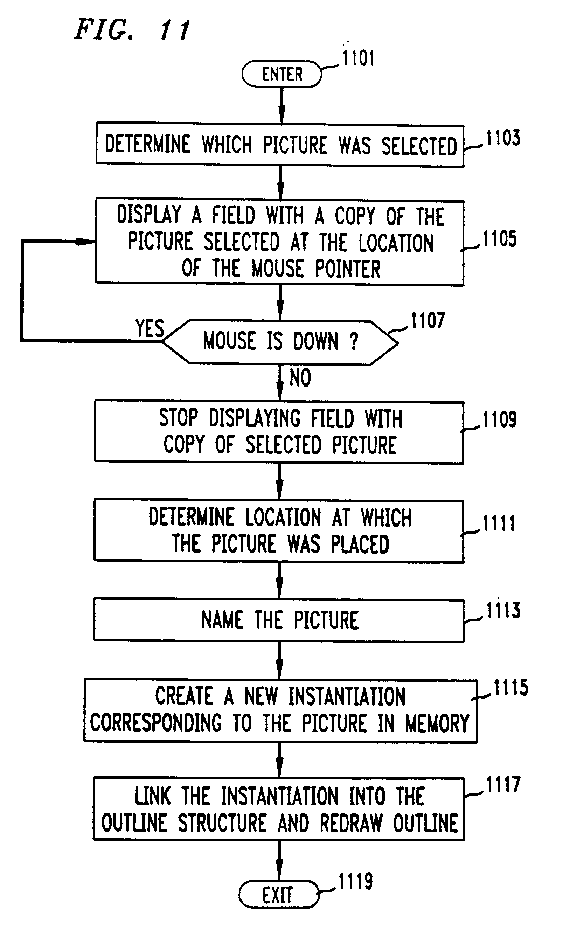

FIG. 11 shows a flow chart of an exemplary process by which a service creator adds a picture to the graphical multilevel outline to a service he has created, in accordance with the principles of the invention. The process is entered in step 1101, when a mouse down event is detected while mouse pointer 105 is located within palette 103. Next, in step 1103, it is determined which picture was selected, i.e., over which picture was mouse pointer 105 when the mouse button was pressed. In step 1105, a field having a copy of the selected picture is displayed at the location of the mouse pointer.

Conditional branch point 1107 tests to determine if the mouse button is still down. If the test result in step 1107 is YES, control passes back to step 1105, which redisplays the field with the copy of the selected field at the current location of mouse pointer 105. If the test result in step 1107 is NO, indicating the mouse button has been released, i.e., the picture is being "dropped" onto work space 101, control passes to step 1109 in which the field having the copy of the selected picture is no longer displayed. Next, in step 1111, the development system determines the location at which the picture was placed.

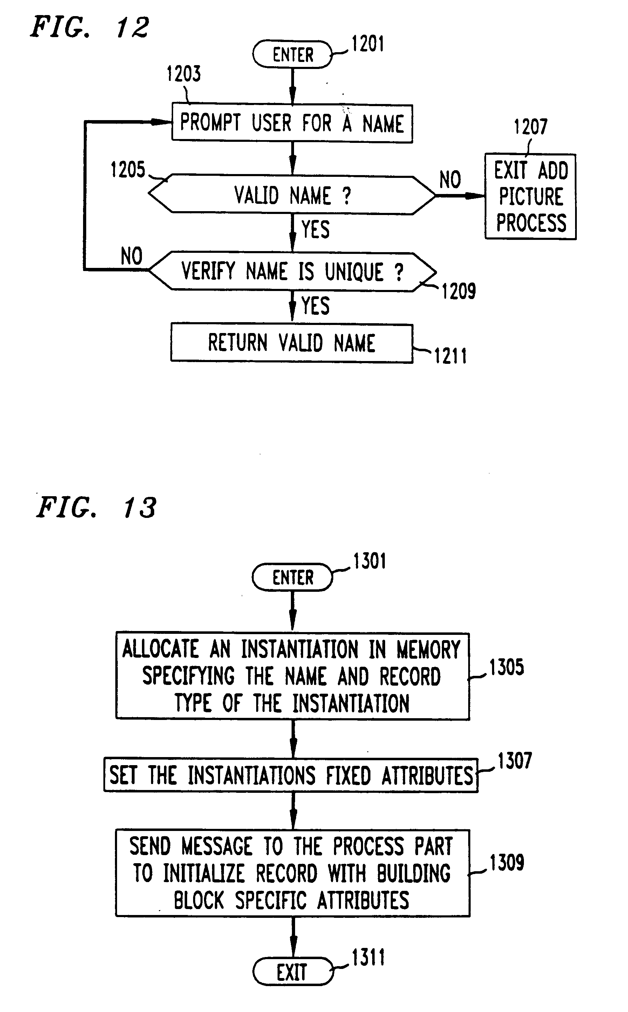

The picture is then named in step 1113. FIG. 12 shows an exemplary subprocess for use in naming a picture, i.e., it is an expanded version of the process carried in step 1113, in accordance with an aspect of the invention. The process is entered in step 1201 upon entering step 1113. In step 1203, the service creator is prompted for a name for the picture. To this end, dialog box 201 (FIG. 2) may be displayed and the service creator enters the desired name in text box 205. Control passes to step 1205 when the user clicks the mouse button while mouse pointer 105 is over "OK" button 207. Conditional branch point 1205 tests to determine if the name entered by the service creator is a valid name. If the test result in step 1205 is NO, control passes to step 1207, and the add picture process is exited. No node is created.

If the test result in step 1205 is YES, control passes to conditional branch point 1209 which tests to determine if the name supplied by the service creator is unique. If the test result in step 1209 is NO, control passes back to step 1203 to obtain a different name. If the test result in step 1209 is YES, control passes to step 1211, in which the valid, unique name is returned to step 1113. The process of FIG. 11 then continues at step 1115.

In step 1115, an instantiation of a service building block for the just-named picture is created in memory in accordance with the principles of the invention. FIG. 13 shows an exemplary process for use in creating instantiations of service building blocks in memory. i.e., it is an expanded version of the process carried out in step 1115, in accordance with an aspect of the invention. The process is entered in step 1301, when control passes to step 1115. In step 1305, a record is allocated for the particular instantiation of the service building block that is being created by the service creator based on the picture that was selected by the service creator. In particular, a record is added in memory specifying. the name of the instantiation.

The instantiation's attributes are set in step 1307. All instantiations have at least the following fixed attributes: a) name, b) class, c) children, d) icon, e) parent, f) parents. Name is the name of the instantiation. Class is the class of the type of service building block that the instantiation represents. Children are pointers to instantiations of service building blocks that are at the immediate level below the instantiation being added. Icon is the particular picture that corresponds to this service building block. It is noted that the pictures may be characters in an especially created graphical font. Parent is a pointer to the service building block that is at the level immediately above the instantiation being added. Parents are pointers that are employed when a node is being reused.

In step 1309, the service building block-specific attributes, i.e., the attributes that depend on the type of service building block being added to the multilevel outline, are initialized. This is done by sending a message requesting an initial set of block-specific attributes to the "process part" corresponding to the added service building block. The process part is an "object", as the term is conventionally used in the computer art, which contains the specification of the particular picture that corresponds to the service building block, description for editing the particular instantiations, a description of what the object does when it is executing and a description of how to initialize the building block-specific attributes. Given the description herein, those skilled in the art will be able to develop and implement their own process parts. The process part receives the message and acts upon it to initialize the block-specific attributes according to the definition of the process part. To do this, the process part has access to the memory defining the entire multilevel outline and may add or change attributes in memory as necessary. The process then exits in step 1311 and control passes to step 1117.

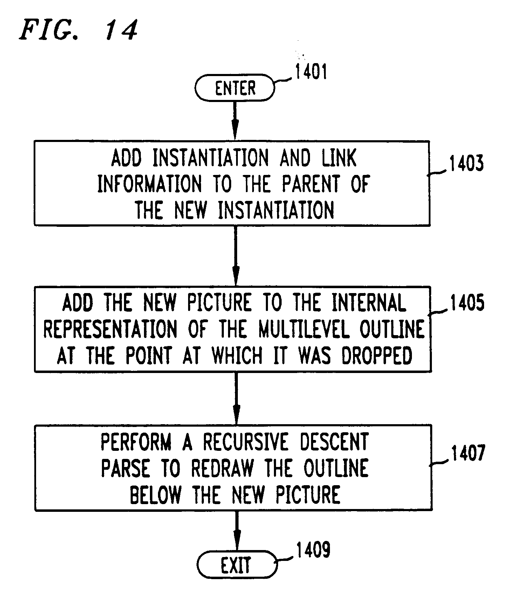

In step 1117 the newly created instantiation is linked with the other instantiations into the program that implements the service logic as specified by the multilevel outline. Also, the pictures that correspond to the service that are further down the outline than that being added are redrawn. FIG. 14 shows an exemplary process for use in adding a service building block into the program for implementing the service, i.e., it is an expanded version of the process carried out in step 1117, in accordance with an aspect of the invention. The process is entered in step 1401 when step 1117 is entered. In step 1403 the just created instantiation is added to the picture above where it was dropped. This may be done by setting one of the children attributes in the picture immediately above where the newly created instantiation was dropped to point to the newly created instantiation. This specifies the instantiation being added is the child of the instantiation of the picture above it. It should be evident that this is not required for the first picture. Also, if there are any pictures at a level in the multi-level outline that are immediately below the just added picture the child attribute of the just added instantiation is set to point to the instantiation corresponding to such a lower picture. Next, in step 1405, the new picture is added to the internal representation of the multi-level outline at the point at which it was dropped. This internal representation specifies the indentation level, entry data, name, and picture for each item in the outline. Next, in step 1407, a recursive-descent parse is performed on the internal representation of the multilevel outline and the result is then used to redraw the relevant pictures. The multilevel outline is then displayed on the screen. The process then exits in step 1409.

Exiting from step 1409 causes control to pass to step 1119 from which the entire process for adding a picture to the graphical multilevel outline is exited. The service creator may then a) edit attributes of the just added or any other picture in the outline, b) add another new picture to his outline, or c) execute the service program to check how the service he has created performs.

Table 1 shows an exemplary graphical font, such as mentioned above, in which each picture is a single character of the font. Using such a font is advantageous in that it typically facilitates and speeds up refreshing of the display by using the preprogrammed special routines of modern computers for rapidly displaying the characters of a font. The font also includes special characters for rendering the connections between the pictures as well as the attachment points. In table 1, the ASCII code corresponding to each character, in hexadecimal, is shown above the character that is displayed on the screen of the development system for that value when the graphical font is selected.

## Table 1

Table 2 shows an exemplary in memory representation of the instantiations of pictures displayed on the screen by the development system for the portion of the service for supplying to a service user his present balance that is shown in FIG. 7. This representation is a character representation in which each line consists of characters representing several items. Unprintable characters and characters unique to the special graphical font of Table 1 are represented in Table 2 by their ASCII value, in hexadecimal. The items are delimited by a comma (","). The first item is the indentation, or spacing, including any vertical bars showing attachment of the instantiation of the picture. The second item is the "entry data", i.e., the condition(s) which must occur for the service building block corresponding to the particular picture to be executed. The third item is the picture for display. The fourth item is the name of the instantiation.

===============================================

## Table 2

-----------------

```
,,x12,Welcome
x14,xce,x0f,Services
x17x15,xda,x11,AskPIN
x17x16x15,xce,x1f,GetBalance
x17x16x16x15,xd1,,
x17x16x16x15,xcd,x12,SpeakBalance
x17x16x16x16x14,xce,,
x17x16x16x14,xcc,,
x17x16x14,xd2,,
x17x15,xdb,x1a,Open?
x17x16x15,Mon-Fri,,
x17x16x16x15,xce,,
x17x16x16x14,xd2,,
x17x16x14,(Other),,
x17x15,xdc,,
x17x14,xca,,
```

===============================================

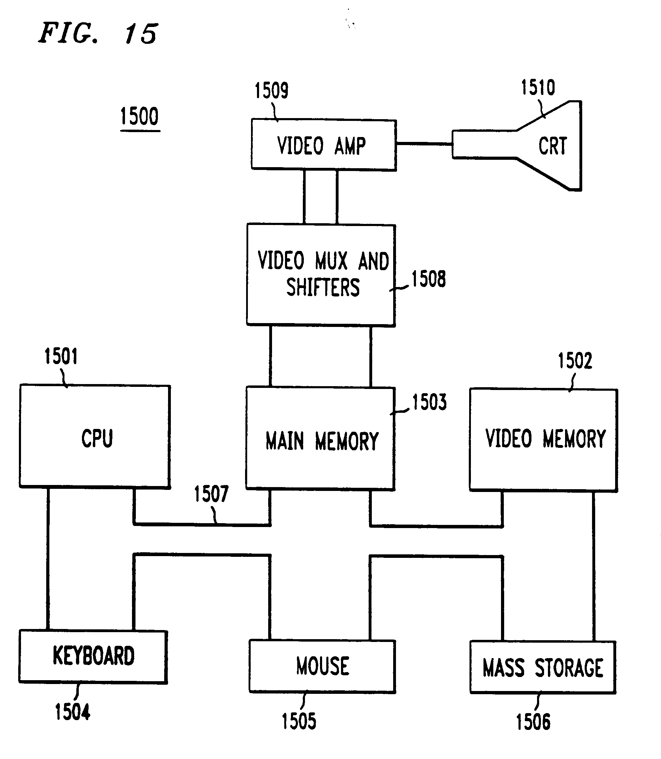

While the present invention may advantageously be implemented on nearly any conventional computer system, exemplary computer system 1500 on which the present invention is implemented is shown in FIG. 15. System 1500 includes a) CPU 1501; b) main memory 1502; c) video memory 1503; d) keyboard 1504 for user input; e) mouse 1505 for manipulating graphic images according to the present invention; and f) mass storage 1506, which may include both fixed and removable media using any one or more of magnetic, optical or magnetoptical storage technology or any other available mass storage technology. These components are interconnected via conventional bi-directional system bus 1507. Bus 1507 contains 32 address lines for addressing any portion of memory 1502 and 1503. System bus 1507 also includes a 32 bit data bus for transferring data between and among a) CPU 1501, b) main memory 1502, c) video memory 1503, and d) mass storage 1506. In the embodiment shown, CPU 1501 is a Motorola 68030 32-bit microprocessor, but any other suitable microprocessor or microcomputer may alternatively be used. Detailed information about the 68030 microprocessor, in particular concerning its instruction set, bus structure, and control lines, is available from MC68030 User's Manual, published by Motorola Inc., of Phoenix, Ariz.

Main memory 1502 of system 1500 comprises eight megabytes of conventional dynamic random access memory, although more or less memory may suitably be used. Video memory 1503 comprises 256K bytes of conventional dual-ported video random access memory. Again, depending on the resolution desired, more or less such memory may be used. connected to a port of video memory 1503 is video multiplex (MUX) and shifter circuitry 1508, to which, in turn, is connected video amplifier 1509. Video amplifier 1509 drives cathode-ray tube (CRT) raster monitor 1510. Video multiplex and shifter circuitry 1508 and video amplifier 1509, which are conventional, convert pixel data stored in video memory 1503 to raster signals suitable for use by monitor 1510. Monitor 1510 is of a type suitable for displaying graphic images having a resolution of 1120 pixels wide by 832 pixels high.

The foregoing merely illustrates the principles of the invention. It will thus be appreciated that those skilled in the art will be able to devise various arrangements which, although not explicitly described or shown herein, embody the principles of the invention and are thus within its spirit and scope.

## Claims

1. A method for use in developing a communication service using a service development system having a display screen, the method
CHARACTERIZED BY
the steps of:
displaying a plurality of pictures in a palette, each picture of said palette corresponding to a respective one of a plurality of service building blocks;
receiving an indication of the particular picture selected by a user from said palette;
creating in memory a particular instantiation of the service building block corresponding to said selected picture;
receiving an indication of a name assigned by said user to said selected picture;
associating said name with said selected picture and with said particular instantiation of the service building block corresponding to said selected picture;
adding an instantiation of said selected picture to a graphical multilevel outline, so that the pictures at each level except the topmost level are the children of pictures at the next highest level, the displaying of said outline being expandable and collapsible at each level;
adding said particular instantiation of the service building block corresponding to said selected picture to a service program comprising service building blocks arranged according to the structure of said outline;
obtaining attributes from said user; and
customizing the operation of said particular instantiation of the service building block corresponding to said selected picture in response to said attributes supplied by said user.

2. The invention as defined in claim **1**
CHARACTERIZED IN THAT
said receiving step includes the step of automatically starting operation of an editor uniquely dedicated to editing attributes for customizing a service building block corresponding to said selected picture.

3. The invention as defined in claim **1** being further
CHARACTERIZED BY
the step of:
simulating the execution of said service program in response to a command supplied by said user.

4. The invention as defined in claim **1** being further including the step of:
CHARACTERIZED BY
executing said service program in response to a call from a remote location.

5. The invention as defined in claim **1** being further
CHARACTERIZED BY
the step of:
downloading said service program to a service providing platform.

6. The invention as defined in claim **1** being further
CHARACTERIZED BY
the step of:
displaying said name assigned to said instantiation of said selected picture with said instantiation of said selected picture when said instantiation of said selected picture is displayed on said display screen.

7. The invention as defined in claim **1**
CHARACTERIZED IN THAT
said instantiation of said selected picture is added to said outline at the location in said outline at which it is dropped.

8. The invention as defined in claim **1**
CHARACTERIZED IN THAT
said the instantiation of said service building block and its associated attributes are represented as interpretable name-value pairs.

9. The invention as defined in claim **1**
   CHARACTERIZED IN THAT
   said customizing step includes the step of:
   receiving an indication of a condition that must occur in order that the service building block corresponding to said selected picture be executed.

10. The invention as defined in claim 9
    CHARACTERIZED IN THAT
    said customizing step further includes the step of:
    displaying an indication of a condition so that an observer would perceive said indication to be associated with said instantiation of said selected picture when said instantiation of said selected picture is displayed on said display screen.

*FIG. 1*

FIG. 2

*FIG. 3*

EP 0 685 955 A2

## FIG. 4

File Edit Go Tools Objects Font Style

Announcement Editor: Welcome — 411

401
Announcement [Welcome] ▼

403  405

119

103

409

407

203

Click here to edit the text of prompt [Welcome]

AT&T

14

## FIG. 5

File  Edit  Go  Tools  Objects  Font  Style       (?)

Announcement Editor: Welcome—411

403

Announcement [Welcome].................. ▼          407

Thank you for calling AT&T's all new service center. I

203

▭▯▮▮▮▮▮▮▮▮▮▮▮▮▮▮▮▮▮▮▮▮▮▮▮▮▮▮▮▮▮▮▮▮▮▮▮▮▮▮     AT&T
Type your prompt using the tab key to insert buckets......

## FIG. 6

File Edit Go Tools Objects Font Style

Announcement Editor: Welcome—411

401

Announcement [Welcome] ▼

403 405

119

Thank you for calling AT&T's all new service center.

103

4407

409

203

Click here to edit the text of prompt [Welcome]

AT&T

## FIG. 7

## FIG. 8

File Edit Go Tools Objects Font Style

**Prompt and Collect Editor: AskPIN**

Initial Prompt [AskPIN ▼]   ☐ Replay Initial Prompt on Retries

~ 801

To Confirm Input [ ▼] Yes [ ▼] No [ ▼]

On Bad Input [ ▼]

On Timeout [ ▼]

On Too Few Digits [ ▼]

~ 803

Timeout [5 ▼][♦]   Data Bucket [ ▼] ~ 805
Interdigit Timeout [3 ▼][♦]   Terminal Digit [ ▼] ~ 807
Retries [3 ▼][♦]   Clear Digit [ ▼]
Minimum Digits [5 ▼][♦]   Validation Table [ ▼] ~ 809
Maximum Digits [5 ▼][♦]   Validation Field [ ▼] ~ 811

**AT&T**

## FIG. 9

| File Edit Go Tools Objects Font Style | ? | |
|---|---|---|
| **Prompt and Collect Editor: AskPIN** | ? | |

Initial Prompt [AskPIN ▼]  ⊠ Replay Initial Prompt on Retries

Please enter your 5 digit PIN

To Confirm Input

On Bad Input

On Timeout

— 901

On Too Few Digits [ ▼ ]

| Timeout | [5 ▼] [✦] | Data Bucket | [ ▼] |
|---|---|---|---|
| Interdigit Timeout | [3 ▼] [✦] | Terminal Digit | [ ▼] |
| Retries | [3 ▼] [✦] | Clear Digit | [ ▼] |
| Minimum Digits | [5 ▼] [✦] | Validation Table | [ ▼] |
| Maximum Digits | [5 ▼] [✦] | Validation Field | [ ▼] |

AT&T

## FIG. 10

File Edit Go Tools Objects Font Style ?

Prompt and Collect Editor: AskPIN ?

Initial Prompt [AskPIN] ▼ ⊠ Replay Initial Prompt on Retries

Please enter your 5 digit PIN ⭲

To Confirm Input ▼ Yes ▼ No ▼

⭲

On Bad Input ▼

⭲

On Timeout ▼

⭲

On Too Few Digits ▼

⭲

Timeout 5 ▼ ⊕  Data Bucket ▼
Interdigit Timeout 3 ▼ ⊕  Terminal Digit ▼
Retries 3 ▼ ⊕  Clear Digit ▼
Minimum Digits 5 ▼ ⊕  Validation Table ▼
Maximum Digits 5 ▼ ⊕  Validation Field ▼

801

AT&T

## FIG. 11

ENTER — 1101

DETERMINE WHICH PICTURE WAS SELECTED — 1103

DISPLAY A FIELD WITH A COPY OF THE PICTURE SELECTED AT THE LOCATION OF THE MOUSE POINTER — 1105

YES ◁ MOUSE IS DOWN ? — 1107

NO

STOP DISPLAYING FIELD WITH COPY OF SELECTED PICTURE — 1109

DETERMINE LOCATION AT WHICH THE PICTURE WAS PLACED — 1111

NAME THE PICTURE — 1113

CREATE A NEW INSTANTIATION CORRESPONDING TO THE PICTURE IN MEMORY — 1115

LINK THE INSTANTIATION INTO THE OUTLINE STRUCTURE AND REDRAW OUTLINE — 1117

EXIT — 1119

*FIG. 12*

```
                    ENTER  ~1201
                       |
1203                   |
  \                    v
   ┌──────────────────────────────┐
   │   PROMPT USER FOR A NAME      │
   └──────────────────────────────┘
                       |                              1207
1205                   v                                \
   ┌────────────────────────────────┐    NO    ┌──────────────┐
   │       VALID NAME ?              │─────────>│  EXIT ADD    │
   └────────────────────────────────┘          │  PICTURE     │
                       | YES                    │  PROCESS     │
                       v                        └──────────────┘
   ┌────────────────────────────────┐
   │    VERIFY NAME IS UNIQUE ?      │
   └────────────────────────────────┘
                       | YES            \1209
                       v
   ┌────────────────────────────────┐
   │      RETURN VALID NAME          │
   └────────────────────────────────┘ ~1211
```

NO (from VALID NAME loop back to PROMPT USER FOR A NAME)

*FIG. 13*

```
                    ENTER  ~1301
                       |
                       v
   ┌──────────────────────────────────────┐
   │ ALLOCATE AN INSTANTIATION IN MEMORY   │
   │  SPECIFYING THE NAME AND RECORD       │~1305
   │     TYPE OF THE INSTANTIATION         │
   └──────────────────────────────────────┘
                       |
                       v
   ┌──────────────────────────────────────┐
   │ SET THE INSTANTIATIONS FIXED ATTRIBUTES│~1307
   └──────────────────────────────────────┘
                       |
                       v
   ┌──────────────────────────────────────┐
   │ SEND MESSAGE TO THE PROCESS PART      │
   │ TO INITIALIZE RECORD WITH BUILDING    │~1309
   │     BLOCK SPECIFIC ATTRIBUTES         │
   └──────────────────────────────────────┘
                       |
                       v
                     EXIT  ~1311
```

*FIG. 14*

```
        ( ENTER )  1401
            │
            ▼
┌──────────────────────────────┐
│   ADD INSTANTIATION AND LINK  │  1403
│   INFORMATION TO THE PARENT OF│
│     THE NEW INSTANTIATION     │
└──────────────────────────────┘
            │
            ▼
┌──────────────────────────────┐
│  ADD THE NEW PICTURE TO THE   │  1405
│  INTERNAL REPRESENTATION OF   │
│  THE MULTILEVEL OUTLINE AT    │
│  THE POINT AT WHICH IT WAS    │
│  DROPPED                      │
└──────────────────────────────┘
            │
            ▼
┌──────────────────────────────┐
│  PERFORM A RECURSIVE DESCENT  │  1407
│  PARSE TO REDRAW THE OUTLINE  │
│     BELOW THE NEW PICTURE     │
└──────────────────────────────┘
            │
            ▼
         ( EXIT )  1409
```

*FIG. 15*